# FASCICULE DE BREVET EUROPEEN

(11) **EP 0 607 335 B1**
(45) Date de publication et mention de la délivrance du brevet: **17.05.1995**
(21) Numéro de dépôt: 92922274.3
(22) Date de dépôt: 07.10.1992
(51) Int. Cl.: B60R 16/02

(54) **CONDUIT DE DISTRIBUTION MIXTE POUR CABLES DE MESURES COURANT FAIBLE ET CABLES D'ALLUMAGE HAUTE TENSION DE MOTEURS A EXPLOSIONS**
GEMISCHTER VERTEILUNGSKANAL FÜR SCHWACHSTROMMESSKABEL UND HOCHSPANNUNGSZÜNDUNGSKABEL IN EXPLOSIONSMOTOREN
COMBINED DISTRIBUTION DUCT FOR LOW CURRENT MEASURING CABLES AND HIGH-VOLTAGE IGNITION CABLES IN INTERNAL COMBUSTION ENGINES

(30) Priorité: 08.10.1991 FR 9112644; 27.05.1992 FR 9206749
(43) Date de publication de la demande: 27.07.1994
(73) Titulaire: CONTROLE MESURE REGULATION - CMR (S.A.), F-13303 Marseille (FR)
(72) Inventeur: FOUACHE, Pascal, F-13003 Marseille (FR)
(74) Mandataire: Roman, Michel
(86) Numéro de dépôt international: FR9200931
(87) Numéro de publication internationale: WO9307029

(56) Documents cités:
- EP-A- 0 231 428
- EP-A- 0 284 488
- EP-A- 0 418 882
- DE-A- 3 337 596
- DE-A- 3 435 566
- DE-A- 3 535 382
- FR-A- 2 078 336
- FR-A- 2 174 810
- FR-A- 2 592 994
- FR-A- 2 639 297
- GB-A- 1 287 074

## Description

La présente invention a pour objet un conduit de distribution mixte pour câbles de mesures courant faible et câbles d'allumage haute tension de moteurs à explosions.

Il peut convenir à tous les types de moteurs à explosion, mais est surtout destiné aux moteurs de grosse puissance et en particuliers aux moteurs fixes et aux moteurs marins.

Dans le but de permettre l'amélioration de leur rendement et de leurs performances, les moteurs à explosions modernes ont de plus en plus recours à des capteurs de températures ou d'autres paramètres, ce qui entraîne l'ajout de faisceaux de câbles supplémentaires aux réseaux habituels tels que câbles d'allumage ou autres. On se heurte alors à l'incommodité des montages nécessitant des éléments d'accrochage des câbles de liaison pyrométriques et de distribution d'allumage sur le moteur, et aux contacts défectueux dus à l'interposition de boîtes de jonction des lignes. A cela s'ajoutait la difficulté provenant du remplacement des capteurs ou des bobines ainsi que l'encombrement et le manque d'esthétique de ces installations.

Le brevet FR 72 09 565, du même inventeur, décrit un conduit rigide destiné aux câbles pyrométriques des capteurs de température d'échappement de moteurs Diesel, mais cela ne résout que partiellement le problème.

Dans le brevet DE-A-3 435 566 est présenté un conduit de câblage pour véhicules, formé d'un corps comportant au niveau de chaque cylindre des embases de connecteurs et une sortie de câble, ledit corps étant fermé par un couvercle. Cette disposition impose de situer tous les connecteurs et sorties d'un même côté du conduit, ce qui limite la souplesse d'emploi. En outre, il n'est prévu aucunne possibilité de séparation des différents types de câbles à l'intérieur du conduit.

Le dispositif selon la présente invention supprime tous ces inconvenients et permet d'assurer la mesure des températures et la distribution d'allumage du moteur en diminuant l'encombrement des faisceaux de câbles et les risques de déterioration, tout simplifiant l'installation et en facilitant les démontages et remontages, ainsi que l'interchangeabilité des capteurs ou des bobines d'allumage qui peuvent être remplacés sans aucune difficulté. De plus l'ensemble ainsi stabilisé résiste aux vibrations, présente une très grande robustesse, évite la perturbation sur les mesures et s'intègre parfaitement au support.

Ce dispositif est constitué par la combinaison d'un conduit de câblage comportant au niveau de chaque cylindre un connecteur de raccordement par capteur, ainsi qu'une ou plusieurs sorties alimentant la bobine d'allumage correspondante et les commandes éventuelles, ledit conduit étant constitué d'un tube d'acier fixé par bride sur le moteur, ou divisé en deux parties emboîtables comportant des rainures internes destinées à recevoir une plaque de blindage, des cartes électroniques d'adaptation ou des accessoires de fixation des câbles, les deux parties pouvant être séparées par un profilé interne rainuré et étant conçues pour permettre le câblage avec le conduit ouvert, lesdites parties n'étant assemblées et fixées sur le moteur qu'une fois cette opération terminée.

Sur les dessins schématiques annexés, donnés à titre d'exemple non limitatif d'une des formes de réalisation de l'objet de l'invention:
la figure 1 représente en axonométrie un montage utilisant deux conduits de distribution selon l'invention,
la figure 2 est une coupe transversale agrandie suivant les flèches A-A de la figure 1, montrant les deux parties séparées d'un conduit de câblage dont la fermeture est assurée par rivetage ou équivalent,
la figure 3 est une vue en bout également agrandie, suivant la flèche B de la figure 1, du même conduit montrant la disposition des connecteurs de raccordement de capteur et des sorties pour bobine d'allumage, ou de commande,
les figures 4 et 5 représentent dans les mêmes conditions un conduit à fermeture par encliquetage,
les figures 6 et 7 représentent, toujours dans les mêmes conditions un conduit comportant une séparation interne.
et les figures 8 et 9 sont des coupes transversales suivant les flèches A-A de la figure 1, montrant deux variantes de réalisation du conduit, constitué d'un tube d'acier comportant une cloison centrale.

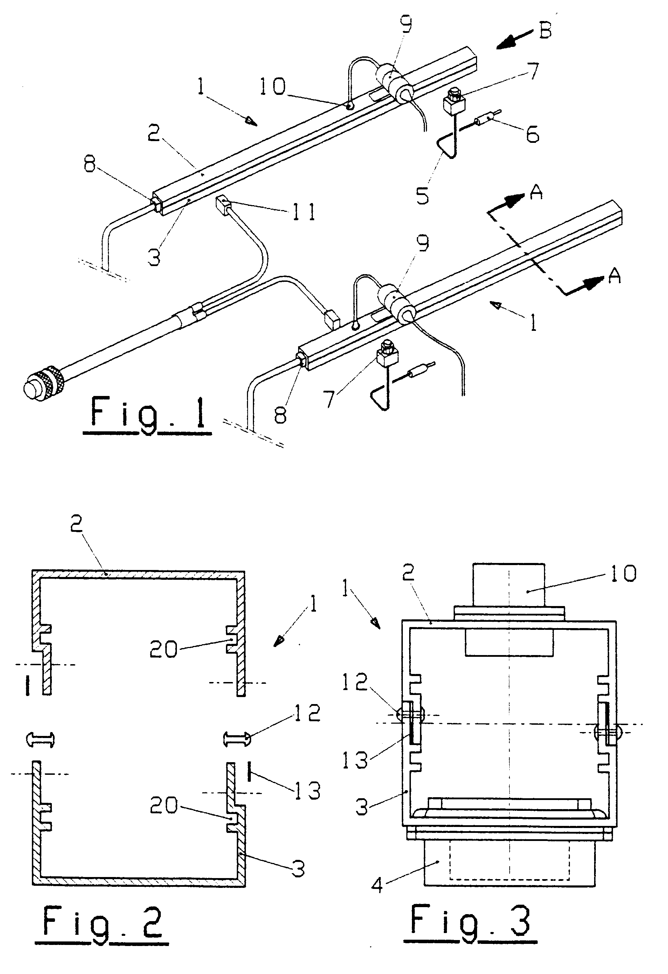

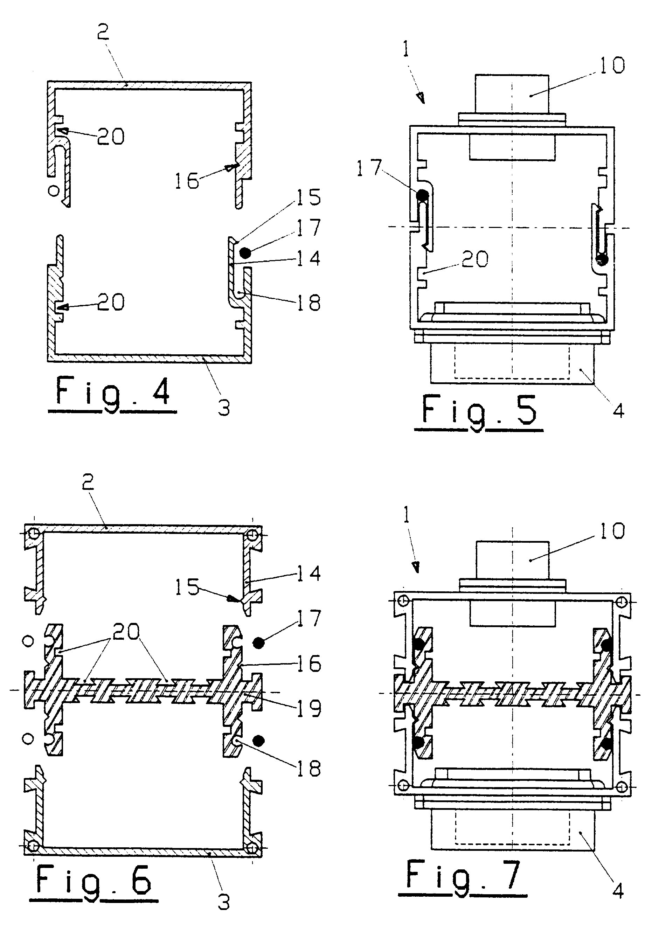

Le dispositif, figures 1 à 7, est constitué de deux profilés en "U" 2, 3 réalisés de préférence en alliage léger et qui, une fois assemblés composent un conduit de câblage 1 ayant la forme d'un tube de section carrée ou rectangulaire abritant les câbles électriques aboutissant aux cylindres ou à toute autre partie d'un moteur thermique à combustion interne.

Le conduit de câblage 1 peut être équipé au niveau de chaque cylindre d'une embase de connecteur 4 sur laquelle vient se raccorder le câble de liaison 5 d'un capteur 6 correspondant, grâce à un connecteur 7.

Les capteurs 6 sont le plus souvent des capteurs de température. Dans ce cas, ils sont simplifiés et allégés pour résister aux vibrations, alors que l'absence de tête de raccordement électrique évite tout desserrage des connexions. Ils sont constitués par un tube en acier inoxydable à sortie droite ou coudée, dont l'extrémité peut être rétreinte pour réduire l'inertie thermique au niveau de la mesure. Un dispositif d'arrêt non réglable délimite la pénétration dans la manchette d'échappement ou dans la chambre de combustion pour chaque type de moteur. Le câble de liaison protégé sous tresse métallique prolonge le thermo-couple constantannickel-allié et assure la liaison jusqu'au conduit 1 par le connecteur 7. Les conducteurs sont de qualité appropriée en fonction du thermo-couple. Un câble de liaison assure la continuité des circuits pyrométriques depuis le conduit 1 jusqu'aux appareils de mesure. Il est formé par plusieurs conducteurs cuivre et un ou plusieurs conducteurs de compensation communs ou séparés, afin de déplacer la soudure froide, et protégé mécaniquement par une tresse métallique et équipé de connecteurs embrochables à une ou aux deux extrémités.

Chaque embase de connecteur 7 est relié par l'intérieur du conduit de câblage 1 à un connecteur général de mesures 8 multicontact fixé de préférence à une extrémité de celui-ci, soit directement, soit par l'intermédiaire d'un boîtier électronique de traitement de signal.

De même, le conduit 1 est équipé, au niveau de chaque bobine d'allumage 9, d'une sortie 10 sur laquelle vient se raccorder la bobine correspondante ou l'élément de commande. Chaque sortie est reliée par l'intérieur du conduit à un connecteur général d'allumage ou de commande 11 multicontact fixé sur ledit conduit.

L'assemblage des deux profilés 2, 3 peut se faire au moyen de rivets 12, un joint d'étanchéité 13 étant interposé entre les parties se recouvrant.

Cet assemblage peut également être réalisé par encliquetage des profilés 2 et 3, ces derniers étant pourvus d'une partie amincie 14 portant une nervure 15 en relief correspondant à une rainure 16 et assurant l'immobilisation des deux parties, un joint cylindrique 17 emprisonné dans un logement adéquat 18 assurant l'étanchéité.

On peut envisager un conduit de câblage 1 avec un profilé central 19, également en alliage léger, pouvant être équipé de un ou deux profilés 2, 3 selon les besoins (intégration ou non des circuits d'allumage), l'assemblage du ou des profilés avec le profilé central s'effectuant de la même manière que pour les profilés seuls.

Les profilés 2, 3, ainsi que le profilé central 19 éventuel, sont pourvus de rainures internes 20 destinées à recevoir une plaque de blindage, des accessoires de fixation des câbles ou des cartes électroniques d'adaptation, ces dernières pouvant comporter des composants de traitement de signal permettant une mise en réseau de ces cartes en apportant une "intelligence" locale ou déportée.

Les câbles 25, 26 pourront être frettés dans le conduit 1 ou maintenus en place par des bandes de mousse antivibratoires ou tout procédé assurant un maintien du câblage.

Le raccordement des sorties générales est obtenu par des connecteurs multicontacts embrochables montés sur des câbles de liaison multiconducteur protégés mécaniquement et assurant la continuité des liaisons jusqu'aux appareils de mesure et d'allumage.

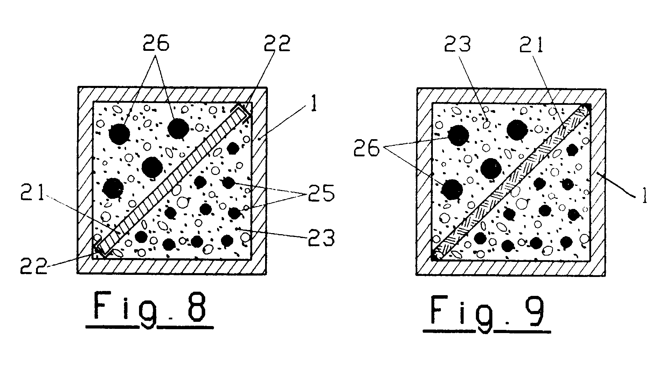

Dans une variante d'exécution, le dispositif est constitué d'un tube d'acier 2 à section carrée possèdant un cloison centrale longitudinale 21 assurant la séparation des circuits de mesure de ceux relatifs à l'allumage. Cette cloison peut être isolante (Figure 9), ou métalliques et fixée grâce à des supports isolants 22 formant glissière (Figure 8). Dans ce dernier cas, la cloison centrale 21 est reliée à la masse à l'une de ses extrémités.

Après passage des câbles courant faible 25 reliant les embases de connecteurs au connecteur principal de mesures 8, ainsi que des câbles d'allumage 26 reliant les sorties 10 au connecteur principal d'allumage 11, le conduit 1 est rempli, en fin de fabrication, de polyuréthane expansé 23 assurant l'isolation et la protection contre les vibrations de ces câbles.

Le positionnement des divers éléments constitutifs donne à l'objet de l'invention un maximum d'effets utiles qui n'avaient pas été, à ce jour, obtenus par des dispositifs similaires.

## Revendications

1. Conduit de distribution mixte pour câbles de mesure de courants faibles et câbles d'allumage haute tension de moteurs à explosions, pouvant convenir à tous les types de moteurs, mais surtout destiné aux moteurs de grosse puissance et en particulier aux moteurs fixes et aux moteurs marins, constitué d'un conduit (1) de câblage comportant au niveau de chaque cylindre une ou plusieurs embases de connecteur et une sortie de câble,
caractérisé en ce que le conduit (1) de câblage est conçu pour recevoir une plaque de blindage, une séparation interne (19) ou une cloison longitudinale centrale (21) de séparation des câbles de mesure et d'allumage, et qu'il comporte au niveau de chaque cylindre, d'une part une ou plusieurs embases de connecteur (4) pour capteurs (6) divers, d'autre part une sortie (10) pour l'alimentation de la bobine d'allumage (9) correspondante ou de toute autre commande.

2. Dispositif selon la revendication 1, se caractérisant par le fait que le conduit (1) est constitué de deux profilés (2, 3) emboîtables pourvus de rainures internes (20) destinées à recevoir une plaque de blindage, des cartes électroniques d'adaptation ou des accessoires de fixation des câbles, les profilés (2, 3) étant conçus pour permettre le câblage avec le conduit ouvert, lesdits profilés n'étant assemblées et fixées sur le moteur qu'une fois cette opération terminée.

3. Dispositif selon l'une quelconque des revendications précédentes, se caractérisant par le fait que le conduit de câblage (1) comporte une séparation interne (19), pouvant être équipé de un ou de deux profilés (2, 3) et/ou de rainures internes (20) selon les besoins.

4. Dispositif selon l'une quelconque des revendications précédentes, se caractérisant par le fait que les profilés (2, 3), ainsi que la séparation interne (19) sont réalisés en un matériau tel qu'alliage léger permettant d'alléger le système afin d'en faciliter la manutention.

5. Dispositif selon l'une quelconque des revendications précédentes, se caractérisant par le fait que le conduit de câblage (1) est équipé de cartes électroniques comportant des composants permettant d'assurer le traitement du signal et une mise en réseau de manière à apporter une intelligence locale ou déportée.

6. Dispositif selon l'une quelconque des revendications précédentes, se caractérisant par le fait que l'assemblage des deux profilés (2, 3), et de la séparation interne éventuelle, est fait au moyen de rivets (12) ou équivalent, un joint d'étanchéité (13) étant interposé entre les parties se recouvrant.

7. Dispositif selon l'une quelconque des revendications 1 à 5, se caractérisant par le fait que l'assemblage des deux profilés (2, 3), et du profilé central (19) éventuel, est réalisé par encliquetage, les profilés (2, 3) étant pourvus,d'une partie amincie (14) portant une nervure (15) en relief correspondant à une rainure (16) et assurant l'immobilisation des deux parties, un joint cylindrique (17) emprisonné dans un logement adéquat (18) assurant l'étanchéité.

8. Dispositif selon la revendication 1, se caractérisant par le fait que le conduit (1) est constitué d'un tube d'acier (2) de section carrée fixé par brides sur le moteur, pourvu d'une cloison longitudinale centrale (21) de séparation des câbles de mesure et d'allumage.

9. Dispositif selon la revendication 8, se caractérisant par le fait que la cloison longitudinale centrale (21) est isolante.

10. Dispositif selon la revendication 8, se caractérisant par le fait que la cloison longitudinale centrale (21) est métallique et fixée grâce à des supports isolants (22) formant glissière, et que ladite cloison est reliée à la masse à l'une de ses extrémités.

11. Dispositif selon l'une quelconque des revendications précédentes, se caractérisant par le fait que, après passage des câbles courant faible (25) reliant les embases de connecteurs au connecteur principal de mesures (8), ainsi que des câbles d'allumage (26) reliant les sorties (10) au connecteur principal d'allumage (11), le conduit de câblage (1) est rempli, en fin de fabrication, de polyuréthane expansé (23) assurant l'isolation et la protection contre les vibration desdits câbles.

12. Dispositif selon l'une quelconque des revendications précédentes, se caractérisant par le fait que le raccordement des sorties générales est obtenu par des connecteurs multicontacts embrochables montés sur des câbles de liaison multiconducteur protégés mécaniquement et assurant la continuité des liaisons jusqu'aux appareils de mesure et d'allumage.

## Claims

1. Electrical distribution conduit for a mixture of low voltage measurement cables and high voltage ignition cables as used in explosion engines, suitable for all types of engines, but above all for use in high powered engines and especially fixed and marine engines, consisting of a cable conduit (1) with at each cylinder one or several plug receptacles and a cable outlet,
characterized in that the cable conduit (1) has been designed to receive a shielding plate, an internal separation (19) or central longitudinal partition (21) for separating the measurement and ignition cables, and comprising at each cylinder, firstly one or several plug receptacles (4) for various sensors (6), and secondly an outlet (10) for supplying the corresponding ignition coil (9) or any other control.

2. Device as per claim 1, characterized in that the cable conduit (1) consists of two interlocking sections (2, 3) with internal groove (20) designed to receive a shielding plate, electronic adaptation cards or cable fixing accessories, the sections (2, 3) being designed to allow open conduit cabling, the said sections only being assembled and fixed on the motor once this operation has been completed.

3. Device as per any one of the aforesaid claims characterized in that the cabling conduit (1) has an internal separation (19) which can be equipped with one or two sections (2, 3) and/or internal grooves (20) according to requirements.

4. Device as per any one of the aforesaid claims characterized in that the sections (2, 3) together with the internal separation (19) are prepared from a material such as light alloy in order to lighten the system and make handling easier.

5. Device as per any one of the aforesaid claims characterized in that the cable conduit (1) has electronic cards fitted with components for signal processing and networking so as to provide local or remote information.

6. Device as per any one of the aforesaid claims characterized in that the two sections (2, 3) and any internal separation are assembled using rivets (12) or equivalent system, a seal (13) being positioned between the parts which overlap.

7. Device as per any one of claims 1 to 5 characterized in that the two sections (2, 3) and any central section (19) are assembled by clipping together, the sections (2,3) being fitted with a thinner part (14) with a rib (15) in relief corresponding to a groove (16) and immobilizing the two parts, a cylindrical seal (17) enclosed in a suitable housing (18).

8. Device as per claim 1, characterized in that the conduit (1) consists of a steel tube (2) with central longitudinal partition (21) for separating the measurement and ignition cables.

9. Device as per claim 8, characterized in that the central longitudinal partition (21) acts as an insulator.

10. Device as per claim 8 characterized in that the central longitudinal partition (21) is metal and secured using insulating support (22) forming a slide and that the said partition is connected to the ground at one of its ends.

11. Device as per any one of the aforesaid claims characterized in that after placing low voltage cables (25) connecting the plug receptacles to the main measurement cable plug (8), and the ignition cables (26) connecting the outgoing cables (10) to the main ignition plug (11), the cabling conduit (1), on completion of fabrication, is filled with expanded polyurethane (23) to insulate the cables and protect them against the vibrations.

12. Device as per any one of the aforesaid claims characterized in that the outgoing cables are connected by withdrawable multi-contact plugs fitted on the mechanically protected multi-wire connecting cables providing cable continuity up to the measurement and ignition equipment.

## Patentansprüche

1. Gemeinsamer Verteilerkanal für Schwachstrom-Meßkabel und Hochspannungs-Zündkabel von Verbrennungsmotoren, geeignet für alle Motortypen, jedoch hauptsächlich bestimmt für Hochleistungsmotoren und im besonderen feststehende Motoren und Schiffsmaschinen, gebildet von einem Kabelkanal (1), welcher in Höhe jedes Zylinders einen oder mehrere Steckersockel und einen Kabelausgang aufweist, dadurch gekennzeichnet, daß der Kabelkanal (1) ausgelegt ist, eine Abschirmleiste, eine innere Abtrennung (19) oder eine zentrale Längswand (21) zur Trennung von Meß- und Zündkabel aufzunehmen, und daß er einerseits in Höhe jedes Zylinders einen oder mehrere Steckersockel (4) für verschiedene Sensoren (6) und andererseits einen Ausgang (10) zur Versorgung der zugehörigen Zündspule (9) oder anderer Steuerorgane aufweist.

2. Vorrichtung gemäß Anspruch 1, dadurch gekennzeichnet, daß der Kabelkanal (1) aus zwei ineinander greifenden Profilen (2, 3) gebildet wird, die mit internen Hohlkehlen (20) versehen sind, dazu bestimmt, eine Abschirmleiste, Anpaß-Elektronikkarten oder Kabelbefestigungs-Zubehör aufzunehmen, wobei die Profile (2, 3) so ausgelegt sind, daß sie die Verkabelung bei offenem Kabelkanal ermöglichen, und die besagten Profile erst nach Beendigung dieses Vorgangs zusammengefügt und am Motor befestigt werden.

3. Vorrichtung gemäß irgendeinem der vorhergehenden Ansprüche, dadurch gekennzeichnet, daß der Kabelkanal (1) eine innere Abtrennung aufweist, die nach Bedarf mit einem oder zwei Profilen (2, 3) und/oder internen Hohlkehlen (20) ausgerüstet werden kann.

4. Vorrichtung gemäß irgendeinem der vorhergehenden Ansprüche, dadurch gekennzeichnet, daß die Profile (2, 3) sowie die innere Abtrennung (19) aus einem Material wie Leichtmetall-Legierung hergestellt sind, was eine Ausführung des Systems mit geringem Gewicht ermöglicht, um seine Handhabung zu erleichtern.

5. Vorrichtung gemäß irgendeinem der vorhergehenden Ansprüche, dadurch gekennzeichnet, daß der Kabelkanal (1) mit Elektronikkarten ausgerüstet ist, die mit Komponenten bestückt sind, welche die Signalverarbeitung und eine Vernetzung ermöglichen, um eine örtliche bzw. verlagerte Intelligenz zu liefern.

6. Vorrichtung gemäß irgendeinem der vorhergehenden Ansprüche, dadurch gekennzeichnet, daß der Zusammenbau der beiden Profile (2, 3) und der eventuellen internen Abtrennung mittels Nieten (12) oder desgleichen erfolgt, wobei eine Dichtung (13) zwischen die sich überdeckenden Teile eingefügt ist.

7. Vorrichtung gemäß irgendeinem der Ansprüche 1 bis 5, dadurch gekennzeichnet, daß der Zusammenbau der beiden Profile (2, 3) und dem eventuellen mittleren Profil (19) durch Einrasten erfolgt, wobei die Profile (2, 3) einen verjüngten Teil (14) mit einer Rippe aufweisen, die einer Auskerbung (16) entspricht und die Immobilisierung dieser beiden Profile, und eine in einen geeigneten Sitz (18) eingefügte zylindrische Dichtung (17) die Dichtheit gewährleistet.

8. Vorrichtung gemäß Anspruch 1, dadurch gekennzeichnet, daß der Kabelkanal (1) aus einem Stahlrohr (2) mit quadratischem Querschnitt besteht, welches mit Schellen am Motor befestigt ist, versehen mit einer zentralen Längswand (21) zur Trennung von Meß- und Zündkabel.

9. Vorrichtung gemäß Anspruch 8, dadurch gekennzeichnet, daß die zentrale Längswand (21) isolierend ist.

10. Vorrichtung gemäß Anspruch 8, dadurch gekennzeichnet, daß die zentrale Längswand (21) aus Metall besteht und mittels isolierenden Halterungen (22), welche Gleitschienen bilden, befestigt ist, und daß die besagte Längswand an einem ihrer Enden mit der Masse verbunden ist.

11. Vorrichtung gemäß irgendeinem der vorhergehenden Ansprüche, dadurch gekennzeichnet, daß nach Durchführung der Schwachstromkabel (25), welche die Steckersockel mit dem Haupt-Meßstecker (8) verbinden, sowie der Zündkabel (26), welche die Ausgänge (10) mit dem Haupt-Zündstecker (11) verbinden, der Kabelkanal (1) am Ende der Fertigung mit Zell-Polyurethan (23) ausgefüllt wird, das die Isolierung und den Schutz gegen Vibrationen der besagten Kabel gewährleistet.

12. Vorrichtung gemäß irgendeinem der vorhergehenden Ansprüche, dadurch gekennzeichnet, daß der Anschluß der allgemeinen Ausgänge durch Multikontakt-Steckverbinder erreicht wird, die auf mehradrige, mechanisch geschützte Verbindungskabel montiert sind, welche den Durchgang der Verbindungen bis zu den Meß- und Zündgeräten gewährleisten.
